Europäisches Patentamt

European Patent Office

Office européen des brevets

(19)

(11) Veröffentlichungsnummer: **0 290 007 B1**

# (12) EUROPÄISCHE PATENTSCHRIFT

(45) Veröffentlichungstag der Patentschrift: **21.08.91**

(51) Int. Cl.⁵: **C04B 40/02, B28B 3/24**

(21) Anmeldenummer: **88107155.9**

(22) Anmeldetag: **04.05.88**

(54) **Verfahren und Einrichtung zur Herstellung von Körpern, insbesondere Bauteilen aus zu härtendem Material.**

(30) Priorität: **05.05.87 HU 200487**

(43) Veröffentlichungstag der Anmeldung:
**09.11.88 Patentblatt 88/45**

(45) Bekanntmachung des Hinweises auf die
Patenterteilung:
**21.08.91 Patentblatt 91/34**

(84) Benannte Vertragsstaaten:
**AT BE CH DE ES FR GB GR IT LI LU NL SE**

(56) Entgegenhaltungen:
**WO-A-85/00587**
**DE-A- 2 601 032**
**LU-A- 28 801**
**US-A- 4 117 060**

(73) Patentinhaber: **FAKOMBINAT SZOMBATHELY**
**Zanati ut 21**
**H-9700 Szombathely(HU)**

(72) Erfinder: **Alpár, Tibor, Dr.**
**Székely Bertalan u. 20**
**H-9700 Szombathely(HU)**
Erfinder: **Györvári, János**
**Levendula u. 8**
**H-9700 Szombathely(HU)**
Erfinder: **Schmidt, Ernö, Dr.**
**Kárpáthi Kelemen u. 21**
**H-9700 Szombathely(HU)**

(74) Vertreter: **Patentanwälte Zellentin & Partner**
**Zweibrückenstrasse 15**
**W-8000 München 2(DE)**

EP 0 290 007 B1

**Beschreibung**

Die Erfindung bezieht sich auf ein Verfahren zur Herstellung von Körpern, insbesondere Bauteile aus zu härtendem, ein hydraulisches Bindemittel, insbesondere Zementbindemittel enthaltendem Material.

Es sind Verfahren zur Fertigung von Bauteilen bekannt, in deren Zuge die Härtung des mit Zementbindemittel geformten, jedoch noch rohen Materialgemisches durch Zuleitung von $CO_2$-Gas in das Materialgemisch beschleunigt wird /siehe z. B. die USA Patentschrift Nr. 4 093 690, die schweizerische Patentschrift Nr. 1 460 284/. Grundlage dieser Methoden ist die Karbonatisierung, d.h. der Vorgang, in dessen Verlauf sich die im Zementmörtel in grosser Menge vorhandene $Ca(OH_2)$-Verbindung unter Einwirkung des $CO_2$-Gases ziemlich schnell in Kalkstein umwandelt. Die sich im Verlaufe dieses Vorganges bildenden Kalksteinmoleküle binden sich so stark aneinander, dass die Festigkeit des Produktes, z. B einer Bauplatte innerhalb von 5-30 Minuten sogar 35-50 % der Tage-Festigkeit erreichen kann, obwohl die Hydratation des Bindemittels z. B. des Zements noch garnicht begonnen hat.

Der Karbonatisierungsprozess wird im allgemeinen in dem das Zement als Bindemittel enthaltende rohen Gemisch beinhaltenden geschlossenen Raum so durchgeführt, dass in diesem eine Druckdifferenz erzeugt und hiernach durch Einleiten des $CO_2$-Gases ein den atmosphärischen überschreitender Druck aufgebaut wird, demzufolge das $CO_2$-Gas in die Poren des rohen Materialgemisches eindringen und die chemische Reaktion vor sich gehen kann. Das rohe Gemisch wird in eine die Form des zu fertigen gewünschten Produktes bestimmende Schablone gefüllt und dort verdichtet und darauffolgend mit der Schablone zusammen oder aus dieser entnommen in einen verschliessbaren Raum gesetzt. Diese Lösung ist jedoch ziemlich kostenaufwendig, da sie nur umständlich und mit einem grossen Aufwand verwirklicht werden kann. Dabei ist die abwechselnd erfolgende Anwendung des Vakuums und des Überdruckes langwierig und so sind die eine übrigens auch nur diskontinuierlich in mehreren Arbeitsgängen (Einfüllung in die Schablone und Verdichtung; Füllen und Entleeren des Karbonatisierungsraumes; Karbonatisierung) durchführbare Produktion ermöglichenden Technologien ziemlich zeitaufwendig.

Aus der ungarischen Patentschrift 189 455 ist eine mit Karbonatisierung kombinierte Bauplatten--Fertigungstechnologie bekannt, bei der zur Herstellung des bindemittelhaltigen rohen Materialgemisches als Zuschlagstoff ein elastisches Fasermaterial verwendet und die Eigenschaft eines derartigen Gemisches ausgenutzt wird, dass es nach einem Zusammenpressen in grösserem oder geringerem Masse zurückfedert, d.h. sein Volumen zunimmt, wenn die Presskraft noch während der Abbindezeit des - hydraulischen Bindemittels - Zements augehoben wird. Das zwischen zwei Pressplatten eingeführte rohe Gemisch wird im Randbereich der Pressplatten - sei es mittels eines entlang des Randes verstärkten Plattenteiles, sei es durch Auftragen einer lokal grösseren Menge des rohen Materialgemisches - in einem stärkere Masse zusammengepresst als der übrige Teil des Materialgemisches, sodass an den Rändern eine grössere Dichte und demzufolge eine geringere Gasdurchlässigkeit aufweisende Zone entsteht, als im inneren Bereich. Diese den Rändern entlanglaufende, eine höhere Dichte ausweisende Zone funktioniert wie eine Dichtung und verhindert, dass das zwecks Karbonatisierung zugeleitete $CO_2$-Gas aus dem Inneren des Gemisches seitlich entweicht. Diese Lösung ist zwar vorteilhafter als die zuvor beschriebenen, ihr Nachteil besteht jedoch einerseits in der periodischen Arbeitsweise, d.h. in einer verhältnismässig geringen Produktivität, sowie in der Tatsache, dass dadurch nur aus elastische Fasermaterialien enthaltenden Gemischen feste Endprodukte hergestellt werden können.

Aufgabe der Erfindung ist ein Verfahren zur Herstellung von Körpern, insbesondere Bauelementen aus zu härtendem Material mit Beschleunigung der Abbindung durch einen Karbonatisierungsvorgang zu schaffen, das einerseits eine kontinuierliche Fertigung ermöglicht und dadurch die Produktivität und Wirtschaftlichkeit wesentlich erhöht, andererseits nicht auf die Verwendung von mit elastischen Faserzuschlagstoffen hergestellten zu härtenden Gemischen als Ausgangsmaterial des zu formenden Materials beschränkt ist, wodurch das Sortiment der mit der Karbonatisierungsmethode wirtschaftlich herstellbaren Produkte in wesentlichem Masse erweitert wird.

Die Erfindung beruht auf der Erkenntnis, dass in dem Falle, wenn das zu härtende Material durch einen an seinen beiden Enden offenen Schablonenraum geführt und das Entweichen des $CO_2$-Gases aus der Schablone im Bereich der Zuführungsstelle durch eine ein entsprechendes Masse erreichende kontinuierliche mechanische Verdichtung des rohen Gemisches und im Bereich der Austrittsstelle durch Verminderung des Druckes des $CO_2$-Gases auf ein Mindestmass - gegebenenfalls auf den atmosphärischen Druck - verhindert wird und wenn das $CO_2$-Gas zwischen diesen beiden Stellen entlang der Schablonenoberfläche(n) gleichmässig verteilt, jedoch von der Eintrittsstelle zur Austrittsstelle hin mit abnehmendem Druck in den Schablonenraum zugeführt wird, die Fertigung kontinuierlich erfolgen kann und das aus der Schablone austretende Produkt im Ergebnis des in der Schablone ablaufenden Karbonatisierungsprozesses bereits in festem geformten Zustand erscheint.

EP 0 290 007 B1

Aufgrund dieser Erkenntnis wurde die gestellte Aufgabe im Sinne der Erfindung mit Hilfe eines Verfahrens gelöst, bei welchem das noch nicht gehärtete Materialgemisch in eine Schablone geführt und dort durch Einführung von $CO_2$-Gas in das Material eine Karbonatisierungsreaktion durchgeführt und dadurch das Materialgemisch gehärtet wird, wobei für das Verfahren kennzeichnend ist, dass das zu härtende Materialgemisch kontinuierlich durch einen an seinen beiden Enden offenen Schablonenraum hindurchgepresst wird, wobei $CO_2$-Gas mit einem sich von der Zuführungsstelle in Richtung zur Austrittsstelle des gehärteten Körpers vermindernden Druck in das Material gepresst und im Schablonenraum in der Umgebung der Zuführungsstelle aus dem zu härtenden Material durch mechanische Verdichtung eine quasi gasdichte Schicht erzeugt und zwischen diese Schicht und den Schablonenoberflächen ein quasi gasdichter Zustand hergestellt wird; wobei in der Umgebung der Austrittsstelle vorzugsweise nur eine zum vollständigen oder im wesentlichen vollständigen Ablauf der chemischen Reaktion der Karbonatisierung erforderliche $CO_2$-Gasmenge in den Schablonenraum eingeführt wird. Vorteilhafterweise wird das zu härtende Material mit Hilfe eines eine alternierende Bewegung ausführenden Mittels in den Schablonenraum eingepresst bzw. gestampft.

Vorteilhaft ist, wenn das $CO_2$-Gas in den Schablonenraum durch mindestens eine begrenzende Fläche desselben mit einem den atmosphärischen überschreitenden Druck eingeführt und das das zu härtende Material durchdringende Gas von einem bereits verminderten Druck und geringerer Menge durch mindestens eine andere Schablonenoberfläche aus dem Schablonenraum herausgeführt, oder/und mindestens auf eine Oberfläche des Schablonenraumes ein Vakuum einwirken gelassen und das $CO_2$-Gas auf diese Weise durch das Material durchströmen gelassen bzw. das Durchströmen des Gases intensiviert wird.

Nach einem anderen vorteilhaften Erfindungsmerkmal wird in der im Bereich der Zuführungsstelle der verdichteten Materialschicht folgenden Zone in die Poren des Materialgemisches $CO_2$-Gas mit einem Druck von vorzugsweise ca. 3-6 bar eingepresst und dann in einer - in Richtung der Materialbewegung - darauffolgenden zweiten Zone, wo die Momentanreaktion der Karbonatisierung explosionsartig erfolgt, eine der durch diese Reaktion verbrauchten $CO_2$-Gasmenge in wesentlichen entsprechende Menge von $CO_2$-Gas mit einem geringeren Druck von z. B. 2-3 bar dem Material zugeführt, und dadurch eine weitere Fortsetzung der Karbonatisierungsreaktion hervorgerufen, hierauf in einer dritten Zone $CO_2$-Gas mit einem noch geringeren Druck von z. B. 1-2 bar in den Schablonenraum geführt und dadurch der im wesentlichen vollständige Ablauf der Karbonatisierungsreaktion gesichert wird. Für eine weitere Durchführungsart des Verfahrens ist kennzeichnend, dass in dem unmittelbar hinter der Austrittsöffnung des durch die Karbonatisierung gehärteten Materials befindlichen Schablonenraum eine Ausgleichzone vorgesehen wird, die ein Gasausströmen aus dieser Ausgleichzone kontrolliert und die Gaszuführung in die hinter dieser Ausgleichszone befindliche Zone(n) in Abhängigkeit von der Menge und/oder des Druckes des ausströmenden Gases vorgenommen wird. Im allgemeinen ist es vorteilhaft, wenn der aus dem Schablonenraum austretende, durch die Karbonatisierung gehärtete Körper - vorzugsweise durch Sägen - auf Mass zugeschnitten und wenn das $CO_2$-Gas mit einem Gasgemisch in den Schablonenraum geführt wird, das $CO_2$--Gas in einem Anteil von vorzugsweise mindestens 30 % enthält.

Es kann vorteilhaft sein, wenn ZUSÄTZLICH $CO_2$-Gas in das rohe Materialgemisch bereits vor seiner Zuführung in die Schablone geleitet wird. Durch diese Vorbereitung der Karbonatisierung kann der Bindungsprozess beschleunigt werden.

Die erfindungsgemässe Einrichtung weist eine Schablone sowie eine $CO_2$-Gasquelle, z. B. eine Gasflasche auf und in mindestens einer der Schablonenwände sind zur Zuleitung des einen den atmosphärischen Druck überschreitenden Druck aufweisenden $CO_2$-Gases in den Schablonenraum geeignete Öffnungen, z. B. Löcher vorgesehen, wobei für diese Einrichtung kennzeichnend ist, dass die Schablone eine zur Zuführung des rohen zu härtenden Materialgemisches dienende Zuführöffnung sowie eine zum Austritt des durch die Karbonatisierung gehärteten Körpers dienende Austrittsöffnung aufweist; vor der Eintrittsöffnung ist ein zum Einpressen des rohen zu erhärtenden Materialgemisches in den Schablonenraum und zum Weiterbewegen des gehärteten Materialgemisches sowie des daraus durch Karbonatisierung erhärteten Körpers durch den Schablonenraum geeigneter Pressmechanismus vorgesehen; und die in diesen Schablonenraum mündenden zur Zuleitung des $CO_2$-Gases dienenden Löcher sind über gesonderte Löchergruppen verteilt, die mit zur Zuleitung des $CO_2$-Gases zonenweise mit jeweils getrennt regelbarem Druck geeigneten Gaszuleitungsmitteln in Verbindung stehen. Vorteilhaft ist, wenn in mindestens einer der Schablonenwände zur Abführung des nach dem Ablauf der chemischen Reaktion der Karbonatisierung gegebenenfalls übriggebliebenen $CO_2$-Gases dienende Öffnungen vorgesehen sind, die vorzugsweise an eine Leitung angeschlossen sind, durch die die $CO_2$-Gasquelle z.B. Glasflasche mit der die zur Zuleitung des $CO_2$-Gases in den Schablonenraum dienenden Löcher enthaltenden Schablonenplatte verbunden ist.

Für eine Ausführungsform der Einrichtung ist kennzeichnend, dass sie eine zur Zuleitung des $CO_2$-Gases in den Schablonenraum dienende Vorlaufleitung, sowie eine zur Zurückleitung des nach dem Ablauf

3

der Karbonatisierungsreaktion - gegebenenfalls - übriggebliebenen CO₂-Gases in die Vorlaufleitung dienende Rücklaufleitung besitzt; der Vorlaufleitung eine Gaspumpe angeschlossen ist, in die auch die Rücklaufleitung einmündet und in den in der Strömungsrichtung des Gases vor der Pumpe liegenden Abschnitt der Rücklaufleitung eine aus der CO₂-Gasquelle z. B. der Gasflasche austretende, mit einer Absperrarmatur versehene Leitung mündet und dass die Vorlaufleitung mit den gaszuleitungsseitigen gesonderten Löchergruppen durch Ventile enthaltende Zweigleitungen verbunden ist, wobei von den zum Abführen des nach der Karbonatisierungsreaktion - gegebenenfalls - übriggebliebenen Gases dienenden Löchergruppen in die Rücklaufleitung mündende ebenfalls Ventile enthaltende Zweigleitungen herausgeführt sind. In die Rücklaufleitung kann eine Vakuumpumpe eingeschaltet werden.

Nach einem weiteren Erfindungsmerkmal münden die einzelnen Löchergruppen sowohl gaszuführungsseitig als auch restgasaustrittsseitig in der Aussenfläche der Schablonenplatten vorzugsweise in gasdicht angeschlossenen voneinander separiertem geschlossenen Kammern. Vorteilhaft kann weiterhin sein, wenn die einzelnen Löchergruppen aus im Inneren der Schablonenplatten verlaufenden - z. B. meanderförmigen - Kanälen in den Schablonenraum münden, und jeder Kanal mit je einer aus der Vorlaufleitung austretenden Zweigleitung bzw. in die Rücklaufleitung mündenden Zweigleitung verbunden ist.

Nach einem anderen Ausführungsbeispiel der Einrichtung ist hinter der Austrittsöffnung der Schablone eine zum Zuschneiden des aus dem Schablonenraum austretenden durch Karbonatisieren gehärteten Körpers geeignete Vorrichtung, vorzugsweise eine Säge angeordnet.

Einer weiteren Massnahme der Erfindung entsprechend, sind der Aussenseite der Schablonenplatten in dem Bereich hinter der Austrittsöffnung der Schablone eine mindestens je eine Löchergruppe abdeckende Kammer angeschlossen, aus denen Kontrollventile enthaltende Gasaustrittsstutzen ausmünden.

Für eine weitere Ausführungsform der Einrichtung ist kennzeichnend, dass der Pressmechanismus ein alternierend bewegliches Stampfmittel, z. B. einen Kolben enthält, dessen Querschnittsform und Grösse der Querschnittsform und Grösse der Zuführöffnung der Schablone gleich oder im wesentlichen gleich ist. In diesem Falle ist es vorteilhaft, wenn die Schablone stehend angeordnet, die Bewegungsbahn des Kolbens senkrecht, der Kolben zwischen Führungsschienen eingeführt ist, die Führungsschienen mit einer glockenartigen Schutzverkleidung abgedeckt sind, deren unteren Rand im Bereich der Unterkante der Führungsschienen verläuft und zwischen dem Rand und den Führungsschienen eine Öffnung besteht; und der Bewegungsmechanismus mit der Schutzumhüllung zusammen in einem zur Zuführung des rohen zu härtenden Materialgemisches in die Schablone dienenden Trichter angeordnet ist, der in das obere Ende des Schablonenraumes mündet.

Die Erfindung wird im weiteren aufgrund eines vorteilhaften Ausführungsbeispiels unter Bezug auf Zeichnungen beschrieben, die einige Konstruktionseinzelheiten der Einrichtung, mit den Verfahrensbeispielen verbundenen Diagramme, weiterhin einige mit der erfindungsgemässen Methode herstellbare Bauteile darstellen. Es zeigen

| | |
|---|---|
| Fig. 1 | eine Einrichtung im schematischen senkrechten Querschnitt; |
| Fig. 2 | einen Horizontalschnitt entlang der Linie A-A gemäss Fig. 1; |
| Fig. 3a | eine Ausführungsform einer Seitenplatte der Schablone in vergrössertem Massstab im Schnitt entlang der Linie B-B gemäss Fig. 3b; |
| Fig. 3b | eine Ansicht aus der Richtung des Pfeiles C gemäss Fig. 3a; |
| Fig. 4 | ein Diagramm, das die zeitabhängig eintretende Änderung des Druckes und der Körperdichte veranschaulicht, die im Inneren des Gemisches im Verlaufe des Pressens eines zu härtenden Gemisches ohne elastische Zuschlagstoffe stattfindet; |
| Fig. 5 | das gleiche Diagramm wie in Fig. 4 jedoch für ein mit elastischem Zuschlagstoff hergestelltes zu härtendes Gemisch; |
| Fig. 6 | eine durch die Kurven nach Fig. 4 gebildete Kurvenschar, die das Ergebnis der schnell nacheinander folgenden (sich wiederholenden) Pressvorgänge veranschaulicht; |
| Fig. 7 | eine Kurvenschar, die von der nach Fig. 6 darin abweicht, dass sie durch die in Fig. 5 dargestellten Kurven gebildet ist; |
| Fig. 8 | ein Gasdruck-Weg-Zeitdiagramm; |
| Fig. 9a-9f | verschiedene Querschnittsformen aufweisende nach dem erfindungsgemässen Verfahren hergestellte Bauteile zur Veranschaulichung der weitläufigen Anwendbarkeit der Erfindung; |
| Fig 10 | ein nach der erfindungsgemässen Karbonatisierungsmethode verwirklichtes Fertigungsschema des Bauteiles nach Fig. 9f. |

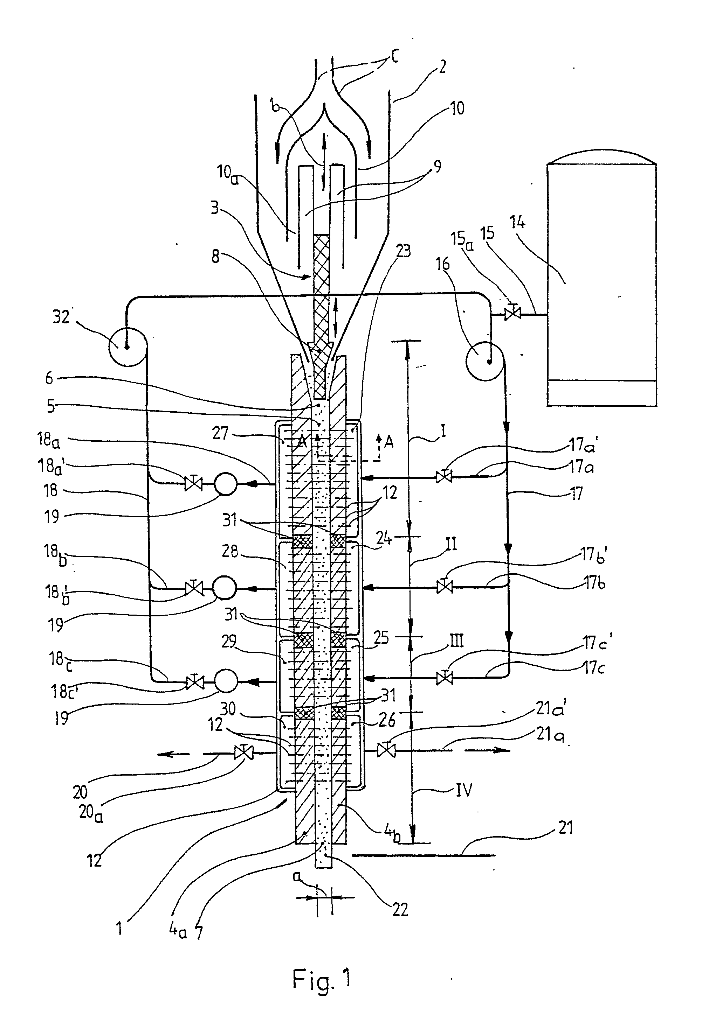

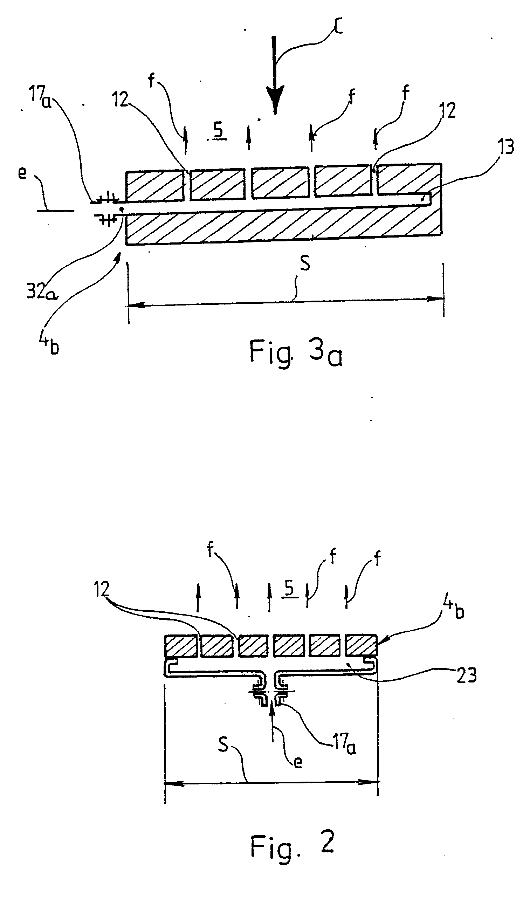

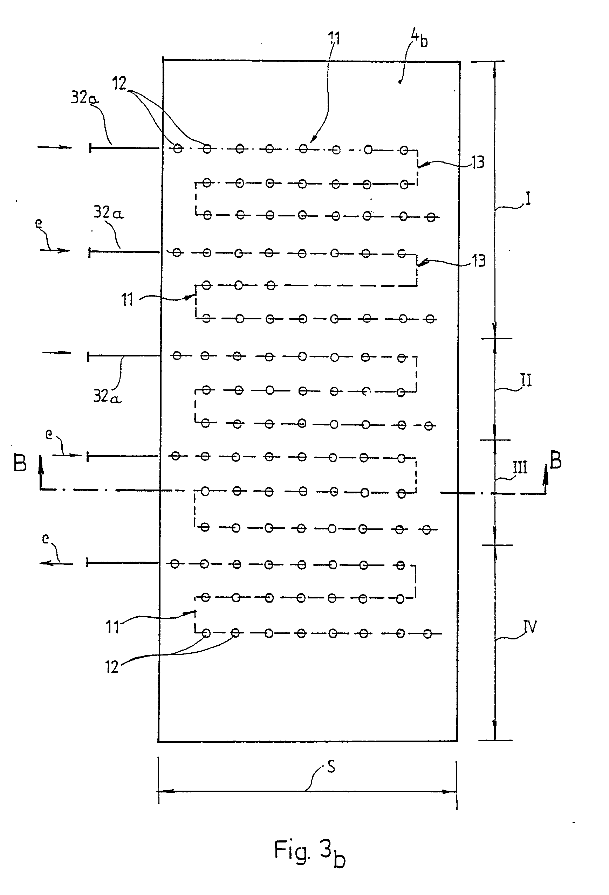

Die Erfindung nach Fig 1 und 2 besitzt eine stehend angeordnete im ganzen mit 1 bezeichnete Schablone, einen Fülltrichter 2 sowie einen Pressmechanismus 3, der im Falle des vorliegenden Beispiels aus einem dem doppelten Pfeil b entsprechend auf- und abwärts beweglichen einen sich erweiternden Halsteil aufweisenden Kolben 8, einem diesen bewegenden (nicht dargestellten) Mechanismus sowie an beiden Seiten des Kolbens 8 während seiner Auf- und Abwärtsbewegung zu dessen Führung dienenden senkrechten Führungsschienen 9 besteht.

Der Schablonenraum 5 der Schablone 1 ist durch voneinander mit Abstand a (Fig 1) angeordnet senkrechte, eine Breite s (Fig 2) aufweisende Schablonenplatten 4a 4b sowie zu diesen senkrechte schmale ebenfalls senkrecht angeordnete (nicht dargestellte) Abschlusswände begrenzt; die Einrichtung nach Fig 1 und Fig 2 dient zur Fertigung von Bauplatten 22 mit einer Stärke a, deren eine zur Ebene der Zeichnung (Fig 1) senkrechte Breitenabmessung durch die in dieser Richtung gemessene Breite des in Fig. 2 angegebenen Werts s der Schablonenplatten 4a, 4b definiert ist, wobei deren andere in der Ebene der Zeichnung (Fig 1) liegende Abmessung, z B ihre Länge wie später ersichtlich - zwischen praktischen Grenzen nach Belieben gewählt werden kann. Die Schablone 1 ist unten und oben offen; die Zuführöffnung der Schablone 1 wurde mit der Bezugsnummer 6, ihre Austrittsöffnung mit der Bezugsnummer 7 bezeichnet. Der Trichter 2 (Fülltrichter) mündet unten in das obere offene Ende der Schablone 1 und der im Trichter befindliche Kolben 8 passt in die Zuführöffnung 6 der Schablone 1 hinein, anders ausgedrückt, seine Querschnittsform und Grösse ist im wesentlichen gleich bzw. vorzugsweise etwas kleiner als die Querschnittsform und Grösse der Zuführöffnung 6.

In dem oberhalb der Schablone 1 angeordneten Trichter 2 ist eine mit ihrer Öffnung 10a nach unten weisende glockenartige Schutzverkleidung 10 vorgesehen, die die Führungsschienen 9 abdeckt und deren unterer Rand im Bereich des unteren Endes der senkrecht verlaufenden Führungsschienen 9 liegt. Die Schutzverkleidung 10 ist gleicherweise mit Abstand von der inneren Wandungsfläche des Fülltrichters 2 und von der äusseren Oberfläche der Führungsschienen 9 angeordnet, wobei ihre Aussenfläche zweckdienlicherweise bogenförmig ausgebildet ist und in dieser Weise die Abwärtsbewegung des in Richtung der Pfeile c zugeführten schüttbaren rohen Materialgemisches in die Zuführöffnung 6 im Trichter 2 erleichtert.

Zur Einrichtung gehört ein in Fig. 1 dargestellter, $CO_2$-Gas mit einem den atmosphärischen Druck überschreitendem Druck enthaltender Gasbehälter 14, der mittels einer eine Sperrarmatur 15a enthaltenden Verbindungsleitung 15 an eine Rücklaufleitung 18 angeschlossen ist, die in eine Gasumlaufpumpe 16 mündet. Aus der Gaspumpe 16 tritt eine Vorlaufleitung 17 aus, von der Ventile 17a′-17c′ enthaltende Zweigleitungen 17a-17c abzweigen. Die Zweigleitungen 17a-17c münden in je eine Verteilerkammer 23-25 ein, die entlang der Schablonenplatte 4b übereinander angeordnet sind, wobei eine ihrer Begrenzungsflächen durch die Aussenseite der Schablonenplatte selbst gebildet wird. Die Kammern 23-25 sind voneinander durch - zweckdienlicherweise gasdichte - Abdichtungen 31 getrennt. Unter der Kammer 25 ist eine weitere von dieser ebenfalls durch eine Dichtung 31 getrennte Kammer 26 angeordnet, aus der ein Ventil 21a′ enthaltender Entlüftungs- und Gasdruckausgleichsstutzen 21a austritt.

An der Aussenfläche der Schablonenplatte 4a sind ebenfalls vier Kammern angeschlossen, die - von oben nach unten - mit Bezugsnummern 27-30 bezeichnet wurden. Aus den Kammern 27-29 treten Zweigleitungen 18a-18c aus, in die je ein Manometer 19 sowie je ein Ventil 18a′ bis 18c′ eingebaut sind. Die Zweigleitungen 18a-18c sind an die bereits genannte Rücklaufleitung 18 angeschlossen, in die eine Vakuumpumpe 32 eingebaut ist. Von der untersten Kammer 30 geht ein Entlüftungs- und Gasdruckausgleichsstutzen 20 aus, in dem ein Ventil 20a (Kontrollventil) eingebaut ist. Die Kammern 27-30 sind ebenfalls durch Dichtungen 31 voneinander getrennt.

In den Schablonenplatten 4a-4b sind Durchgangslöcher 12 (in Fig. 2 gut erkenntlich) vorgesehen, in Fig. 1 sind diese Löcher strichpunktiert veranschaulicht. Auf diese Weise verwirklichen die Löcher 12 eine Gasdurchführungsverbindung zwischen dem Schablonenraum 5 und den Kammern 23-26 bzw. den Kammern 27-30 (von diesen ist in Fig. 2 die Kammer 23 zu sehen).

Die Schablone 1 ist von oben nach unten fortschreitend in technologische Zonen I-IV gegliedert, zu denen je ein Kammernpaar 23, 27; 24, 28; 25, 29 und 26, 30 gehört: auf die Funktion dieser Zonen kommt die Beschreibung bei der Erläuterung der Arbeitsweise der Einrichtung im weiteren zurück.

Die Gaszuführung in den Schablonenraum 5 kann nicht nur wie in Fig. 1 und 2 dargestellt, sondern auch mit Hilfe einer in Fig. 3a, 3b dargestellten Konstruktionslösung erfolgen. In diesem Falle enthalten die Schablonenplatten 4a-4b ein Kanalsystem, das den im Zusammenhang mit Fig. 1 erwähnten technologischen Zonen I-IV entsprechend ausgebildet ist. Zu der obersten Zone I gehören zwei, und zu den Zonen II-IV je eine eine meanderförmige Linienführung aufweisende zur Gasdurchführung dienende Löchergruppen 11, deren Löcher 12 aus je einem ebenfalls eine meanderförmige Linienführung aufweisenden Gasverteilerkanal 13 austreten, und im Inneren der Schablonenplatte 4b verlaufen. (Der besseren Übersichtlichkeit halber sind in Fig 3a nur vier, in den Schablonenraum 5 mündende Löcher 12 dargestellt.) Jeder Gasverteilerkanal 13 hat einen Eintrittsstutzen 32a, der an die jeweilige Zweigleitung 17a - 17n der Vorlaufleitung 17 (im Falle des vorliegenden Ausführungsbeispiels gemäss Fig. 3a der Zweigleitung 17a) angeschlossen ist. Natürlich sind in jeder Zweigleitung Ventile 17a′ ...17n′ eingebaut, sodass die Drücke des durch jede Löchergruppe 11 ausströmenden $CO_2$-Gases voneinander unabhängig eingestellt werden können. In der Schablonenplatte 4a kann ein dem in Fig. 3a, 3b dargestellten gleiches Kanal- und Löchersystem ausgebildet werden, wobei dort die einzelnen Löchergruppen den Zweigleitungen 18a - 18n der Rücklaufleitung 18 angeschlossen werden.

Sowohl bei dem Ausführungsbeispiel nach Fig 1 und 2 als auch im Falle des Ausführungsbeispiels nach Fig. 3a, 3b bieten die Kammern 23 - 26 und die Kammern 27 - 30 mittels der an voneinander unabhängige Gasleitungen angeschlossenen Löchergruppen 11 die Möglichkeit, die Zuführung des $CO_2$-Gases in den Schablonenraum,5 in örtlich festgelegten Bereichen mit voneinander abweichenden Drücken vorzunehmen.

Mit Hilfe der Einrichtung nach Fig. 1 und 2 (bzw. nach Fig. 3a, 3b) erfolgt die Bauplattenfertigung auf folgende Weise:

Das Zement als Bindemittel enthaltende zu erhärtende rohe Materialgemisch wird den in Fig. 1 sichtbaren Pfeilen c entprechend gleichmässig und kontinuierlich in den Trichter 2 eingefüllt. Das zu erhärtende Material gelangt sich abwärts bewegend zu der Zuführöffnung 6 der Schablone 1. Der Kolben 8 wird in einer dem doppelten Pfeil b entsprechenden alternierenden Bewegung gehalten. Der Kolben 8 vollführt je Minute etwa 15-300, meistens 100-150 Pressarbeitsgänge, d.h. die Auf- und Abwärtsbewegung des Kolbens ist - in Abhängigkeit von dem jeweils zu fertigenden Bauteil bzw. dem Grundstoff - in einem weiten Bereich veränderlich und kann auch sehr schnell erfolgen. Die Schutzverkleidung 10 verhindert, dass das rohe Gemisch zum oberen Ende der Führungsschienen 9 gelangt und dadurch die Arbeitsweise des Kolbens 8 stört oder verhindert, der mit seiner alternierenden Bewegung das zu erhärtende Material aus dem Trichter 2 zwischen die Schablonenplatten 4a-4b, d.h. in den Schablonenraum 5 hineinpresst. Als Ergebnis dieses Einpressens steigt die Massendichte des rohen Materialgemisches - im Ergebnis der Relaxation - auf das Mehrfache des Wertes vor dem Pressen. Die zur Hublänge des Kolbens 8 proportionalen Materialteilmengen füllen den Schablonenraum 5 aus und das sich durch denselben von oben nach unten fortbewegende im Verlaufe seines Durchgangs mit $CO_2$-Gas (oder mit der $CO_2$-Komponente eines Gasgemisches) behandelte, d.h. karbonatisierte zementgebundene Material verlässt die Austrittsöffnung 7 der Schablone 1 kontinuierlich in erhärtetem Zustand.

Die Verwirklichung der vorstehend beschriebenen und im weiteren hinsichtlich ihrer einzelnen Phasen noch detaillierter zu beschreibenden Fertigungstechnologie wird durch folgende Faktoren ermöglicht:

- das Zement als Bindemittel enthaltende rohe Gemisch hat - praktisch unabhängig davon, mit welchem Zuschlagstoff es hergestellt wird - stets eine poröse Struktur. Das Ausmass der Porosität ist von der Grösse der Zuschlagstoffkomponenten des Gemisches (z. B. von den Körnchen oder/und Faserabmessungen) und dem Ausmass der Verdichtung abhängig. Die Porosität bedeutet, dass das Gemisch über ein Gasdurchlässigkeitsvermögen verfügt und diese Eigenschaft spielt bei der Karbonatisierung eine wichtige Rolle, da das $CO_2$-Gas nur in eine über ein Gasdurchlässigkeitsvermögen verfügende Materialkomposition hineingeführt werden kann ;

- in der Umgebung der Zuführöffnung 6 der Schablone 1 tritt im Materialgemisch der grösste innere Druck (Spannung) auf, der dann im Schablonenraum 5 abwärts gehend allmälich sinkt. Der genannte maximale innere Druck bringt das Material in derartigem Masse in einen quasi gasdichten Zustand, dass das in den Schablonenraum 5 eingeführte $CO_2$-Gas oben durch die Zuführöffnung 6 nicht aus der Schablone entweichen kann. Mit anderen Worten: die Gasdichtigkeit wird durch das noch nicht gehärtete aber bereits verdichtete Material des herzustellenden Produktes selbst gesichert.

Zurückkommend auf die Beschreibung der Arbeitsweise der Einrichtung nach Fig. 1: das durch den Kolben 8 über den Schablonenraum 5 von oben nach unten beförderte Material wird in den bereits genannten technologischen Zonen I-IV behandelt. Die Karbonatisierung verläuft entscheidend in den Zonen I-III.

Im obersten Bereich der Zone I, in der Umgebung der Zuführöffnung 6 wird durch das Einstampfen des Materials - wie bereits hingewiesen - im Material ein quasi gasdichter Zustand hergestellt, d.h. dass auf mechanischem Wege auch unter Ausnutzung der Relaxationskraft des gepressten Materials gesichert wird, dass das in die im Schablonenraum 5 befindliche Masse eingeführte $CO_2$-Gas durch die Kammer 23 und die Löcher 12 (siehe auch Fig 2) nicht entweicht. (Da sowohl die Rohgemischzufuhr als auch das Einpressen-Einstampfen kontinuierlich erfolgen, ist auch der quasi gasdichte Kern im oberen Teil der Schablone im Verlaufe des ganzen Fertigungsvorganges ununterbrochen vorhanden, d.h. er wird sozusagen kontinuierlich "reproduziert"). Die Wirkung der mechanischen Verdichtung erstreckt sich (zwar sich nach unten hin vermindernd) auf den ganzen Abschnitt I, die Relaxationskraft ist gross und so ist zur Einführung des $CO_2$-Gases in die Poren des rohen Materialgemisches ein ziemlich hoher Gasüberdruck oder/und Anwendung eines Vakuums von der Schablonenwand 4b her erforderlich; das $CO_2$-Gas muss sozusagen in die Poren des Materialgemisches hineingepresst werden. Die erforderliche Grösse des Gasdruckes z. B. 6 bar, kann mittels des Ventils 17a' (Fig. 1) eingestellt werden. Durch Betätigung der Vakuumpumpe 32 kann die Effektivität der Zuführung des $CO_2$-Gases in das Materialgemisch erhöht werden; hierbei ist das Ventil 18a' geöffnet. Mittels des in der Zweigleitung 18a eingebauten Manometers 19 können die Druckverhältnisse des zum Durchströmen gebrachten Gases kontrolliert und die Ventile 17a', 18a' je nach Bedarf verstellt werden. Durch Anwendung eines Vakuums von z. B. 0,5 bar wird eine Druckdifferenz an der inneren Oberfläche der Schablonenplatten 4a, 4b hergestellt, wodurch die von der Schablonenplatte 4b nach der Schablonenplatte 4a gerichtete Querströmung des Gases offensichtlich intensiver wird und die Poren des Materialgemisches im vollen Querschnitt gleichmässig mit $CO_2$-Gas aufgefüllt werden.

In der Zone I werden die Poren des Materialgemisches mit $CO_2$-Gas gefüllt und das überflüssige durch die Löcher 12 der Schablonenplatte 4b in die Kammer 27 eintretende einen geringeren Druck (z. B. 3 bar) aufweisende Gas gelangt durch die Zweigleitung 18a und die Rücklaufleitung 18 in den Gaskreislauf zurück. In Fig. 1 wurden übrigens die Gasströmungsrichtungen an den Leitungen mit Pfeilen bezeichnet, während in Fig. 2 der Weg des aus der Zweigleitung 17a in die Kammer 23 eintretenden Gases mit dem Pfeil e, und der Weg des durch die Löcher 12 in den Schablonenraum 5 ausströmenden Gases mit den Pfeilen f veranschaulicht wurden. In Fig. 3a, 3b wurden die gleichen Bezeichnungen e, f sinngemäss angewandt. Hierbei ist zu bemerken, dass die Gaszuführungslösung gemäss Fig. 3a, 3b eine Möglichkeit bietet, wonach es genügt in den unteren Bereich der Zone I, wo die Verdichtungswirkung des Kolbens 8 im Materialgemisch bereits in geringerem Masse zur Geltung kommt und das Material eine geringere Dichte aufweist (die innere Spannung des zusammengepressten Gemisches ist - wie darauf bereits hingewiesen wurde - am oberen Ende des Abschnittes I die grösste und vermindert sich allmälich nach unten durch die zweite Löchergruppe 11 von oben (Fig. 3) Gas mit einem geringerem Druck von z. B. 5 bar in den Schablonenraum 5 zuzuführen. In diesem Falle hat das austretende Restgas einen Druck von ca. 2-3 bar. Der Druck des in die Zone I eingeführten $CO_2$-Gases soll auf jeden Fall so gewählt werden, dass das Gas durch die im Bereich der Zuführöffnung 6 der Schablone 1 befindliche oberhalb der Zone I liegende verdichtete Materialgemischschicht nicht entweichen kann. Da der quasi gasdichte Zustand auch zwischen den inneren Flächen der Schablonenplatten 4a-4b und dem Materialgemisch gesichert ist, kann das $CO_2$-Gas auch entlang der Schablonenplatten nicht aus dem Schablonenraum 5 entweichen. Die Zuführung des Gases mit zwei unterschiedlichen Drücken in die Zone I hat auch den Vorteil, dass das Gas mit niedrigerem Druck schon deshalb nicht von unten nach oben in Richtung der Zuführöffnung 6 dringen kann, weil das Gas mit höherem Druck dies verhindert und das den geringeren Druck aufweisende Gas in Richtung der gegenüberliegenden Schablonenplatte 4a, d. h. zur Durchströmung des Materialgemisches in Querrichtung zwingt.

In der Zone I beginnt die chemische Reaktion zwischen dem $CO_2$-Gas und dem Zement - d.h. die Karbonatisierung - während sie in der Zone II sozusagen explosionsartig (Momentanreaktion) abläuft.

Die chemische Reaktion verbraucht das in die Zone I eingeführte $CO_2$, ein Druckabfall tritt ein und im Material würde sich ein Vakuum bilden, wenn das $CO_2$ nicht nachgeführt würde. Im Abschnitt II wird deshalb die $CO_2$-Zuführung durch die Zweigleitung 17b und die Kammer 24 weiter fortgesetzt und so das in der Zone I im Verlaufe der chemischen Reaktion verbrauchte $CO_2$-Gas ersetzt. In der Zone II wird das $CO_2$-Gas mit einem geringeren, aber den atmosphärischen noch immer überschreitenden Druck von z. B. 4 bar zugeführt (das Einpressen des Gases mit hohem Druck in die Poren des Materialgemisches ist nicht nötig), das durch das Material strömend in die Kammer 28 bereits nur mit einem Druck von ca. 2 bar austritt und von dort durch die Zweigleitung 18b und die Rücklaufleitung 18 in den Gaskreislauf zurückgelangt. Durch entsprechende Einstellung des Ventils 18b' kann auch in der Zone II Vakuum zur Anwendung kommen, jedoch ist dies nicht unbedingt nötig.

Die Aushärtung des Materialgemisches beginnt bereits in geringerem Masse auch in der Zone I, und sie erreicht in der Zone II ein Ausmass, bei dem die Relaxationskraft vollständig aufhört. So kann sich die in der Erhärtungsphase befindliche Bauplatte 22 (Fig. 1) in der Schablone 1 ungehindert und kontinuierlich abwärts bewegen, das Material presst sich nicht gegen die Schablonenwände, wie im oberen Teil der Zone I (wo die durch den Kolben 8 ausgeübte Presskraft das noch nicht gehärtete rohe Materialgemisch zur Abwärtsbewegung zwingt). Zufolge der chemischen Reaktion der Karbonatisierung entsteht übrigens im Material ein Vakuum.

Der Druck des in die Zone III eingeführten $CO_2$-Gases wird weiter vermindert: hier wird nurmehr das Gas mit einem Druck von z. B. 1 bar zugeführt. In dieser Zone läuft der Karbonatisierungsprozess praktisch vollständig ab. Die der Zone III zugeführte Gasmenge soll den zur vollständigen Karbonatisierungsreaktion noch fehlenden Gasbedarf decken. Auf diese Weise kann der schädliche - die Wirtschaflichkeit der Produktion nachteilig beeinflussende - $CO_2$-Verlust am unteren Ende des Schablonenraumes 5 d.h. bei der Austrittsöffnung 7, wo das gepresste nunmehr karbonatisierte, zum Teil erhärtete Material ins Freie austritt, bloss dadurch verhindert werden, dass in der Zone III entsprechende Druckverhältnisse aufrechterhalten werden, mit anderen Worten: dahin wird nurmehr eine minimale Menge von $CO_2$-Gas (mit minimalem Druck) zugeführt. Der Druck des in die Kammer 29 austretenden restlichen $CO_2$-Gases ist (wenn kein Vakuum vorhanden ist) nicht viel geringer als der Druck des zugeführten Gases, z. B. 0,8-0,9 bar. Auf diese Weise kommt die Karbonatisierungsreaktion mit Sicherheit zum Abschluss. Hierbei ist zu bemerken, dass man auch in den Zonen II und III mit Hilfe der Pumpe 32 in den Kammern 28, 29 ein Vakuum von z. B. 0,5 bar zur Intensivierung der Gasströmung in Querrichtung herstellen kann.

Die Zone IV ist eine Ausgleichszone, hier wird bereits kein $CO_2$-Gas zugeführt, und hier läuft praktisch keine chemische Reaktion mehr ab. In die Kammern 27 und 30 strömt das entlang der Innenfläche der Schablonenplatten 4a, 4b eventuell strömende $CO_2$-Gas von innen nach aussen, wobei seine Menge bzw. sein Druck in der Zone III übrigens so gewählt wurde, dass das Gas dort eben zur Beendigung der Karbonatisierungsreaktion ausreicht. Durch die Kontrollventile 20a, 21a darf das Gas eben nur noch ausblasen, wenn der Gasdruck in der Zone III richtig gewählt wurde. Mit Hilfe dieser Kontrollventile 20a, 21a' kann also der Druck des $CO_2$-Gases in der Zone IV ausgeglichen werden. Auf diese Weise ist die Fertigungstechnologie mit keinem übermässigen $CO_2$-Verbrauch verbunden, da kein Gas aus der Schablone weder oben noch unten - zumindest in einer praktisch wahrnehmbaren Menge - entweichen kann, was hinsichtlich der Wirtschaftlichkeit des Verfahrens ein wesentlicher Faktor ist.

Wird jedoch zur Karbonatisierung kein reines $CO_2$-Gas, sondern ein Gasgemisch verwendet, das $CO_2$ nur zum Teil (z. B. in einem Anteil von 30 %) enthält, so werden die neutralen Gaskomponenten zur Karbonatisierungsreaktion nicht verbraucht und in diesem Falle kann die durch die Kontrollventile 20a, 21a' austretende Gasmenge (Luftmenge) auch eine ziemlich grosse Menge sein und in diesem Falle vollführen die Ventile 20a, 21a' etwa eine Entlüftungsfunktion.

Obwohl die einzelnen Phasen des Karbonatisierungsprozesses räumlich und zeitlich voneinander getrennt stattfinden, verläuft der ganze Produktionsprozess kontinuierlich, da das zu Bauplatten zu formende und zu erhärtende Material den Schablonenraum 5 kontinuierlich passiert. Die durch die Austrittsöffnung 7 in endloser Länge kontinuierlich austretende Bauplatte 22 wird mit Hilfe der in Fig. 1 mit der Bezugsnummer 21 bezeichneten, mit der Verpressungsgeschwindigkeit im Synchronlauf arbeitenden Quersäge auf Mass zugeschnitten. Man erhält zum Teil bereits erhärtete - z.B. eine etwa 30 % der 28-tägigen Festigkeit aufweisende - Bauplatten, die - auf an sich bekannte Weise - künstlich oder durch Stehenlassen weiter erhärtet werden.

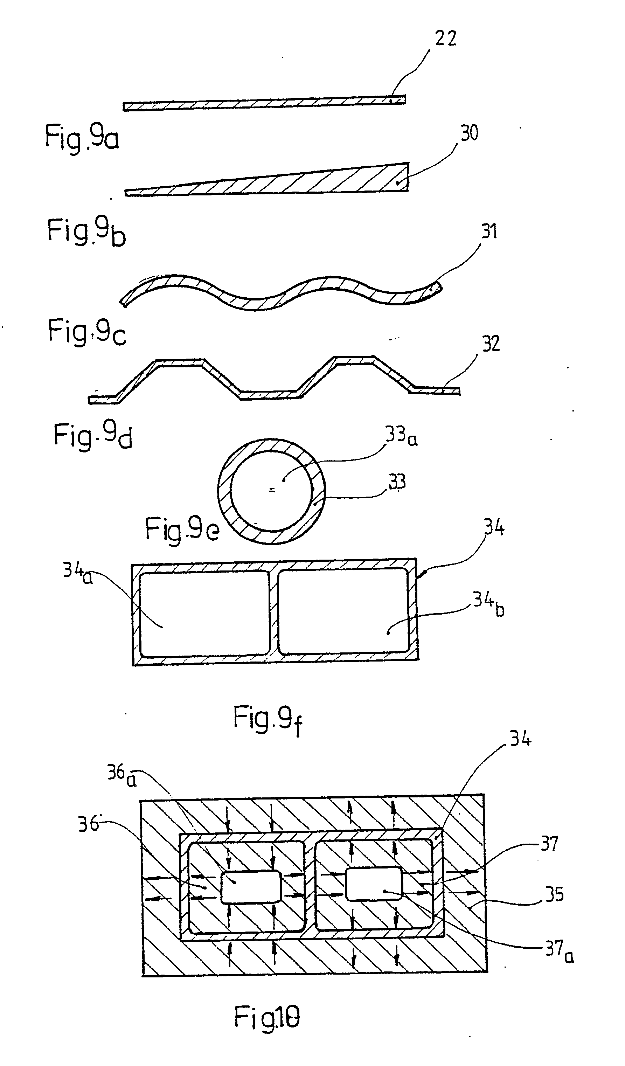

Die Querschnittsform der mit der Einrichtung nach Fig. 1 und 2 hergestellten Bauplatte 22 ist in Fig. 9a dargestellt, aber es ist leicht einzusehen, dass mit Hilfe des erfindungsgemässen Verfahrens und der dazugehörenden Einrichtung - innerhalb praktischer Grenzen - Bauteile mit beliebiger Qurschnittsform durch entsprechende Auswahl der Querschnittsform des Kolbens und des Schablonenraumes hergestellt werden können. Das Bauteil 30 gemäss Fig. 9b zeigt im Querschnitt eine Keilform, das Bauteil 31 gemäss Fig. 9c hingegen eine Wellenlinienform. In Fig. 9d ist ein Bauteil 32 mit Trapezenprofil zu sehen. Selbstverständlich ist auch die Herstellung von Hohlräume aufweisenden Bauteilen mit Hilfe der Erfindung möglich. Das in Fig. 9e dargestellte Bauteil 33 hat einen kreisringförmigen Querschnitt, wobei der einen Kreisquerschnitt aufweisende Hohlraum mit der Bezugsnummer 33a bezeichnet wurde. Das in Fig. 9f dargestellte, einen rechteckförmigen Grundriss aufweisende Bauteil 34 besitzt zwei Hohlräume 34a, 34b. Zur Herstellung von Bauteilen mit Hohlräumen sind natürlich dementsprechende Schablonen erforderlich, um die Hohlräume ausbilden zu können; in Fig. 10 ist die Schablonenkonstruktion des Bauteiles nach Fig. 9f schematisch dargestellt. Im äusseren Schablonenrahmen 35 sowie in den Wänden der Hohlräume aufweisenden inneren Schablonenkerne 36, 37 (die Hohlräume sind mit Bezugsnummern 36a bzw. 37a bezeichnet, sind gleichweise Kanäle Löchern - z.B. denen nach Fig 3a, 3b ähnlich - zur Zuführung des $CO_2$-Gases bzw. zur Durchführung desselben durch das durch die Schablone fortbewegte Material vorgesehen. Eine mögliche Methode der Gasdurchströmung wurde in Fig. 10 mit Pfeilen veranschaulicht, der besseren Übersichtlichkeit halber wurde aber von einer Darstellung der Kanäle und Löcher Abstand genommen.

Die zur Karbonatisierung erforderliche $CO_2$-Gasmenge ist übrigens stets zu der nach der gegebenen Rezeptur verwendeten Zementmenge proportional und beträgt etwa 8-10 Massen % der Zementmenge. Das zur Karbonatisierung verwendete Gasgemisch soll - soweit kein reines $CO_2$-Gas eingesetzt wird - vorzugsweise mindestens 30 % $CO_2$ enthalten.

Die Erfindung wird im weiteren anhand von Beispielen näher beschrieben.

Beispiel 1

Nach dem erfindungsgemässen Verfahren werden mit Hilfe der in Fig. 1 und Fig. 2 dargestellten Einrichtung Bauplatten einer Grösse von 60 x 100 cm und einer Stärke von 20 mm hergestellt. Die Zusammensetzung des durch Verpressen zu formenden und durch Karbonatisierung zu behandelnden rohen zu härtenden Materialgemisches ist wie folgt:

```
Zement                    42 Massen%
gelöschter Kalk            2     "
Quarzsand                 42     "
Wasser                    14     "
```

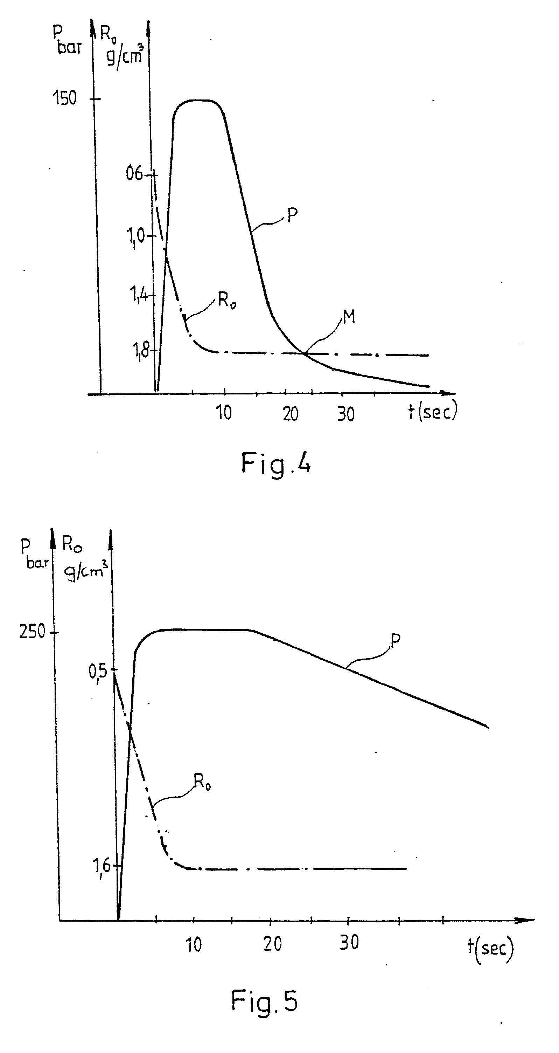

Fig. 4 veranschaulicht, wie die im Inneren eines derartigen - keine elastische (organische) Zuschlagstoffkomponenten enthaltenden - Gemisches die unter Einwirkung der Presskraft auftretende innere Spannung (Druck) $P$ und die Massendichte $R_o$ in Abhängigkeit der Zeit verläuft. In der Anfangsphase des Pressvorganges steigen die innere Spannung und die Massendichte gleicherweise steil an, nach Ablauf einer kurzen Zeit verlangsamt sich die Zunahme der Dichte, die Kurve $R_o$ verläuft fast parallel zur Zeitachse des Diagramms (nähert sich dieser kaum), wobei die innere Spannung $P$ nach Erreichen eines Höchstwertes für eine kurze Zeitdauer im wesentlichen konstant bleibt, und dann rapid abfällt. Beim Schnittpunkt M der Kurven $P$ und $R_o$ ist die innere Spannung nur so gross, dass bei ihr die Massendichte $R_o$ des Materialgemisches sich praktisch auch bei einer Aufhebung der Presskraft nicht mehr verändern würde. (Übrigens charakterisieren dem Diagramm nach Fig. 4 einen ähnlichen Verlauf aufweisende Kurven die Druck-Massendichte-Eigenschaften all der zu härtenden Materialgemische, die einen Feuchtigkeitsgehalt von höchtens 50 % aufweisen und anorganische unelastische Zuschlagstoffe wie z. B. sandigen Kies, Kies, Steinmehl, Glasfasern usw. enthalten.)

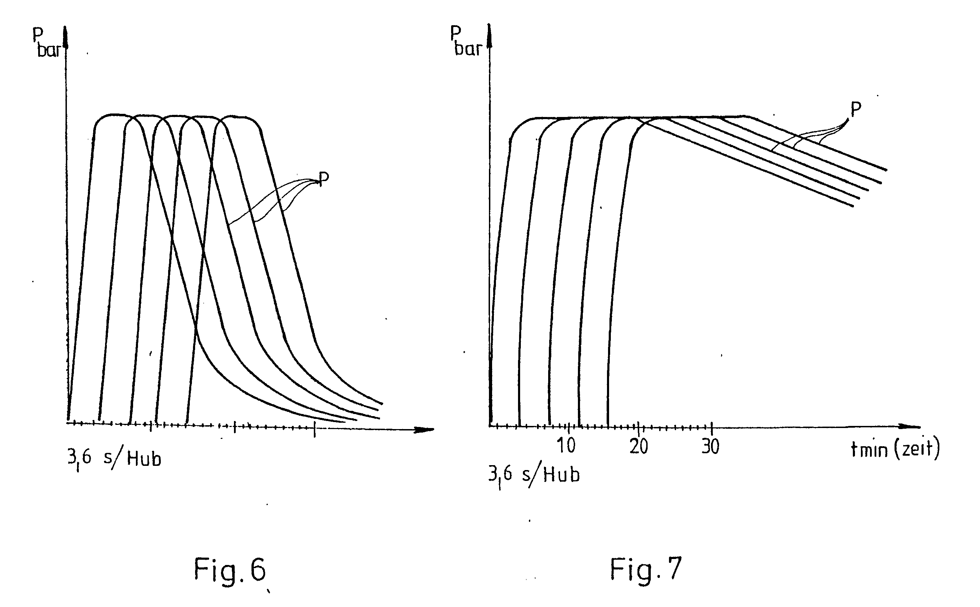

Die im Verlaufe des Einpressens des Gemisches nach dem vorliegenden Beispiel mittels des eine alternierende Bewegung durchführenden Kolbens 8 der in Fig 1-3 dargestellten Einrichtung zeitabhängig auftretenden Druckverhältnisse - d.h. der Verlauf der inneren Spannungen - sind mit der Kurvenschar nach Fig. 6 veranschaulicht. Jede einzelne Kurve $P$ ist die innere Spannungswirkungskurve eines durch einen Kolbenhub vorgenommenen Pressarbeitsganges. Aus Fig. 6 ist gut zu ersehen, dass in der im Schablonenraum 5 (Fig. 1) jeweils zu oberst liegenden Materialgemischschicht stets die gleiche - und maximale - innere Spannung herrscht und diese kontinuierlich besteht, da die oberen waagerechten Abschnitte der Kurven $P$ (siehe auch Fig. 4) etwa in einander übergehen. Auf diese Weise ist in dieser oberen Materialschicht zufolge der mechanischen Pressarbeitsgänge der quasi gasdichte Zustand so lange gesichert, bis der Kolben 8 der Einrichtung das Materialgemisch kontinuierlich in die Schablone 1 hineinstampft.

Die Zuführung des $CO_2$-Gases in das in der Schablone 1 befindliche und sich abwärtsbewegende Material erfolgt - in den Zonen I-III, d.h. von oben nach unten - mit folgenden Drücken:

```
Zone I:    Eintritt           6 bar
           Austritt           3 bar
Zone II:   Eintritt           2 bar
           Austritt           1 bar
Zone III:  Eintritt           0,4 bar
           Austritt          ~ 0 bar
```

In der Ausgleichzone IV wird das entlang der inneren Flächen der Schablonenplatten aus der Zone III eventuell nach unten strömende Gas herausgelassen. Hier kann es sich nur um eine minimale Gasmenge handeln.

Das Material bewegt sich durch den Schablonenraum 5 mit einer Geschwindigkeit von ~1,0 m/Min. hindurch.

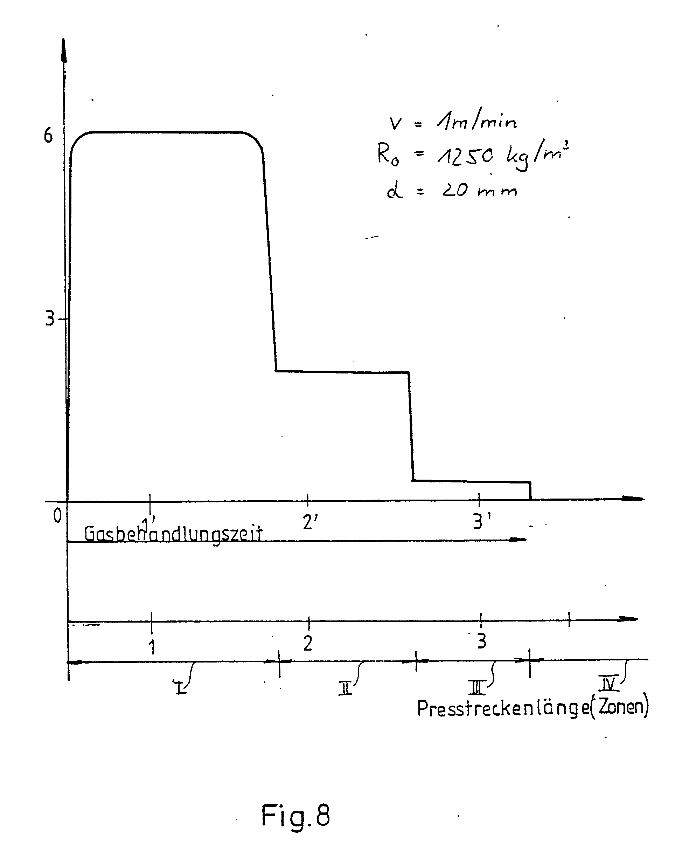

Aus dem Gasdruck-Weg-Zeit-Diagramm nach Fig. 8 - wo v die Geschwindigkeit des sich in der Schablone nach unten bewegenden Materials, $R_o$ die Dichte des zu härtenden Materialgemisches, und d die Stärke der hergestellten Bauplatte bedeutet - geht klar hervor, dass das Material die Zone I - wo der Druck des $CO_2$-Gases der grösste (6 bar) ist - in ca. 2 Minuten passiert, während das Durchströmen der Zonen II und III insgesammt kaum eine Minute beansprucht, wobei der Gasdruck allmählich auf Null zurückgeht und in der Zone IV das Gas bereits keinen Überdruck mehr aufweist. Die Kurve nach Fig. 8 repräsentiert übrigens die innere Relaxationskraft, die mit der durch den Kolben ausgeübten Presskraft proportional ist bzw. die zum Pressvorgang - d.h. zur Verdichtung und Weiterbewegung.des zu verpressenden Materials - erforderliche Kraft stets mit der auf die Seitenplatten der Schablone wirkenden Relaxationskraft proportional ist.

Die Biegefestigkeit des durch die Austrittsöffnung 7 der Schablone 1 austretenden Materials beträgt ca. 35 kp/cm$^2$ (etwa 30 % der endgültigen 28-tägigen Festigkeit), und seine Massendichte beträgt 1250 kg/m$^3$. Zu der vorgesehenen Grösse wird das kontinuierlich austretende Plattenmaterial mit Hilfe einer Trennscheibe zugeschnitten. Die durch die Karbonatisierung zum Teil gehärteten Platten werden auf ihre Kante gestellt gelagert.

Beispiel 2

Nach dem erfindungsgemässen Verfahren werden mit Hilfe der in Fig. 1-3 dargestellten Einrichtung Hohlräume aufweisende Bauteile mit den Abmessungen 163 x 1250 x 4000 mm und einer Wandstärke von 14 mm hergestellt. Die Zusammensetzung des zu formenden und durch Karbonatisierung zu behandelnden zu härtenden Materialgemisches ist wie folgt:

| Zement | 58 | Massen% |
|---|---|---|
| Wasserglas | 1 | " |
| Holzspäne | 14 | " |
| Wasser | 24 | " |
| gelöschter Kalk | 3 | " |

Fig. 5 veranschaulicht, wie die im Inneren eines derartigen - elastische (organische) Zuschlagstoffkomponenten enthaltenden - Gemisches unter Einwirkung des Pressvorganges auftretende innere Spannung $\underline{P}$ - (Druck) und die Massendichte $R_o$ in Abhängigkeit der Zeit verlaufen. (Ähnliche Kurven werden erhalten, wenn das rohe Gemisch anstelle der Zugabe von Holzspänen mit anderen elastischen organischen Zuschlagstoffkomponenten z.B. Zellulose, Pflanzenfasern, Pflanzenspänen, Kunststofffasern usw. oder mit einem Gemisch einer beliebigen Kombination derselben hergestellt wird.) In diesem Falle vermindert sich die innere Spannung $\underline{P}$ - nach dem sie einen maximalen Wert erreicht hat und der diesem entsprechende waagerechte oder im wesentlichen waagerechte Kurvenabschnitt länger als der entsprechende Abschnitt der Kurve $\underline{P}$ nach Fig. 4 ist - nur langsam und zur Konstanthaltung der Massendichte $R_o$ ist die Aufrechterhaltung der Presskraft über eine längere Zeitdauer erforderlich. Bei einer Aufhebung der Presskraft (bevor sich das Material erhärtete) käme es zufolge der im Inneren des Gemisches vorhandenen inneren Spannung zu einer Verminderung der Massendichte des Gemisches, da im Material eine Rückfederung (Relaxationswirkung) stattfände.

Wird das eine in diesem Beispiel angegebene Zusammensetzung aufweisende rohe Gemisch mittels des eine alternierende Bewegung durchführenden Kolbens 8 der Einrichtung nach Fig. 1 und 2 in die Schablone 1 gepresst, entstehen im Gemisch die Druckverhältnisse nach Fig. 7. Die waagerechten Abschnitte der den einzelnen Kolbenhüben entsprechenden Kurven der inneren Spannung $\underline{P}$ gehen auch in diesem Falle kontinuierlich ineinander über, d.h. in dem im Bereich der Zuführöffnung 6 des Schablonenraumes 5 befindlichen Gemisch herrscht stets die gleiche maximale innere Spannung solange vor, bis der Kolben 8 das Material kontinuierlich in die Schablone 1 stampft. Auf diese Weise ist zufolge der mechanischen Verdichtung der quasi gasdichte Zustand im Verlaufe des Fertigungsvorganges gewährleistet.

Der Druck des in die Zonen I-III eingeführten und von dort austretenden Gases ist dem nach Beispiel 1 gleich und auch das Gasdruck-Weg-Zeitdiagramm ergibt sich änlich dem nach Fig. 8, das Volumengewicht und die Festigkeit des Endproduktes sind jedoch - aus dem Unterschied bei den Zuschlagstoffen resultierend - kleiner.

Der grösste Vorteil der Erfindung besteht darin, dass sie eine kontinuierliche grossbetriebliche Produktion von solchen Bauteilen ermöglicht, die aus der Schablone austretend mindestens 30 % ihrer endgültigen (28-tägigen) Festigkeit aufweisen und so ausserordentlich produktiv und wirtschaftlich hergestellt werden können. Ein weiterer Vorteil ist, dass die erfindungsgemässe Produktionseinrichtung einfach ist und so verhältnismässig niedrige Investitionskosten erfordert und dazu geeignet ist, Bauteile aus einem sowohl elastische (faserige) als auch feste körnige Zuschlagstoffe enthaltenden rohen Gemisch produzieren zu können.

Die Erfindung beschränkt sich natürlich keineswegs auf die vorstehend beschriebenen Beispiele des

EP 0 290 007 B1

Verfahrens bzw. auf die dargestellten und erläuterten Ausführungsformen der Einrichtung, sondern kann innerhalb des durch die Patentansprüche definierten Schutzumfanges auf vielerlei Weise verwirklicht werden. So ist z. B. die Schablone nicht unbedingt senkrecht anzuordnen, sondern die Bauteileproduktion ist auch in einer schräggestellten oder sogar waagerechten Schablonenanordnung möglich. Das Verfahren kann auch aufgrund von Rezepturen, die von der in den Beispielen ausgeführten abweichend sind, verwirklicht werden. Die Durchführung des Gases durch das in Bewegung befindliche Material kann auch von der beschriebenen abweichend auf vielerlei Art und Weise verwirklicht werden. Weiterhin ist in vieler sonstiger Hinsicht eine Abweichung von der vorstehenden Beschreibung vorstellbar, ohne den durch die Patentansprüche definierten Schutzumfang zu überschreiten.

**Patentansprüche**

1. Verfahren zur Herstellung von Körpern, insbesondere Bauteilen aus einem Zement oder/und Kalk als Bindemittel sowie Zuschlagstoffe und Wasser enthaltenden zu härtenden Materialgemisch, bei welchem das noch nicht erhärtete Materialgemisch in eine Schablone gebracht und dort durch Einführung von $CO_2$-Gas in das Material eine Karbonatisierungsreaktion durchgeführt und dadurch das Materialgemisch erhärtet wird,
dadurch **gekennzeichnet,**
daß das zu härtende Materialgemisch durch einen an seinen beiden Enden offenen Schablonenraum kontinuierlich hindurchgepreßt wird, wobei von der Materialzuführungsstelle zur Austrittsstelle des erhärteten Körpers hin unter sich verminderndem Druck $CO_2$-Gas in das Material gepreßt und daß im Schablonenraum in der Umgebung der Zuführungsstelle aus dem zu härtenden Material durch mechanische Verdichtung eine quasi gasdichte Schicht erzeugt und zwischen dieser Schicht und den Schablonenoberflächen ein quasi gasdichter Zustand hergestellt wird, wobei in der Umgebung der Austrittsstelle nur eine zum vollständigen oder im wesentlichen vollständigen Ablauf der chemischen Reaktion der Karbonatisierung erforderliche $CO_2$-Gasmenge in den Schablonenraum eingeführt wird.

2. Verfahren nach Anspruch 1, dadurch gekennzeichnet, daß das zu härtende Material mit Hilfe eines eine alternierende Bewegung ausführenden Mittels in den Schablonenraum gepreßt bzw. gestampft wird.

3. Verfahren nach Anspruch 1 oder 2, dadurch gekennzeichnet, daß das $CO_2$-Gas in den Schablonenraum durch mindestens eine Begrenzungsfläche desselben mit einem den atmosphärischen überschreitenden Druck hineingeführt und daß das das zu härtende Material durchströmende Gas von vermindertem Druck und geringerer Menge durch mindestens eine andere Schablonenfläche aus dem Schablonenraum geführt oder/und mindestens auf eine Fläche des Schablonenraumes ein Vakuum angelegt wird, so daß das $CO_2$-Gas auf diese Weise durch das Material durchströmt bzw. sein Durchströmen intensiviert wird.

4. Verfahren nach einem der Ansprüche 1 bis 3, dadurch gekennzeichnet, daß in einer dem Bereich der Zuführungsstelle der verdichteten Materialschicht folgenden Zone (I) in die Poren des Materialgemisches $CO_2$-Gas mit vorzugsweise einem Druck von ca. 3-6 bar gepreßt und hiernach in einer - in Richtung der Materialbewegung - darauffolgenden zweiten Zone (II), wo die Momentanreaktion der Karbonatisierung explosionsartig erfolgt, eine der durch diese Reaktion verbrauchten $CO_2$-Gasmenge im wesentlichen entsprechende Menge von $CO_2$-Gas mit einem geringeren Druck von vorzugsweise 2-3 bar dem Material zugeführt und dadurch die Fortsetzung der Karbonatisierungsreaktion hervorgerufen, darauffolgend in einer dritten Zone (III) $CO_2$-Gas mit einem noch geringeren Druck von vorzugsweise 1-2 bar in den Schablonenraum geführt und dadurch der im wesentlichen vollständige Ablauf der Karbonatisierungsreaktion erreicht wird.

5. Verfahren nach einem der Ansprüche 1 bis 4, dadurch gekennzeichnet, daß in dem unmittelbar hinter der Austrittsöffnung des durch die Karbonatisierung erhärteten Materials befindlichen Schablonenraum der Zone III eine Ausgleichszone (IV) vorgesehen wird, die Gasausströmung aus dieser Ausgleichszone (IV) kontrolliert und die Gaszuführung in die vor dieser Ausgleichszone liegende(n) Zone(n) (I-III) in Abhängigkeit der Menge und/oder des Drucks des austretenden Gases vorgenommen wird.

6. Verfahren nach einem der Ansprüche 1 bis 5, dadurch gekennzeichnet, daß der aus dem Schablonenraum austretende, durch die Karbonatisierung erhärtete Körper auf Maß zugeschnitten wird.

11

EP 0 290 007 B1

7. Verfahren nach einem der Ansprüche 1 bis 6, dadurch gekennzeichnet, daß das $CO_2$-Gas mit einem Gasgemisch in den Schablonenraum geführt wird, das $CO_2$-Gas in einem Anteil von vorzugsweise mindestens 30% enthält.

8. Verfahren nach einem der Ansprüche 1 bis 7, dadurch gekennzeichnet, daß ZUSÄTZLICH $CO_2$-Gas dem rohen Materialgemisch bereits vor seinem Einfüllen in die Schablone zugeführt wird.

9. Einrichtung zur Herstellung von Körpern, insbesondere Bauteilen aus einem Zement oder/und Kalk als Bindemittel sowie Zuschlagstoffe und Wasser enthaltenden zu härtenden Materialgemisch durch Karbonatisierung, wobei die Einrichtung eine Schablone sowie eine $CO_2$-Gasquelle aufweist, und in mindestens einer der Schablonenwände zur Zuführung von einem den atmosphärischen überschreitenden Druck aufweisendem $CO_2$-Gas in den Schablonenraum geeignete Öffnungen vorgesehen sind, dadurch gekennzeichnet, daß die Schablone (1) eine zur Zuführung des rohen zu härtenden Materialgemisches dienende Zuführöffnung (6), sowie eine zum Austritt des durch Karbonatisierung erhärteten Körpers (22) dienende Austrittsöffnung (7) aufweist; vor der Eintrittsöffnung (6) ein zum Einspressen des rohren zu härtenden Materialgemisches in den Schablonenraum (5) und zum Weiterbewegen des zu härtenden Materialgemisches sowie des daraus durch Karbonatisierung hergestellten erhärteten Körpers durch den Schablonenraum (5) geeigneter Preßmechanismus (3) angeordnet ist; und die in diesen Schablonenraum (5) mündenden zur Zuführung des $CO_2$-Gases diedenden Löcher (12) in gesonderten Löchergruppen (11) verteilt sind, die mit zur Zuführung des $CO_2$-Gases von zonenweise (I-III) getrennt regelbarem Druck geeigneten Gaszuführvorrichtungen verbunden sind.

10. Einrichtung nach Anspruch 9, dadurch gekennzeichnet, daß in zumindest einer der Schablonenwände zur Abführung des nach Ablauf der chemischen Reaktion der Karbonatisierung - gegebenenfalls - übriggebliebene $CO_2$-Gases dienende Öffnungen vorgesehen sind, die an eine Leitung angeschlossen sind, durch die die $CO_2$-Gasquelle (14) mit der die zur Zuführung des $CO_2$-Gases in den Schablonenraum (5) dienenden Löcher (12) enthaltenden Schablonenplatte (4b) verbunden ist.

11. Einrichtung nach Anspruch 10, dadurch gekennzeichnet, daß sie eine zur Zuführung des $CO_2$-Gases in den Schablonenraum (5) dienende Vorlaufleitung (17) sowie eine zur Zurückleitung des nach dem Ablauf der Karbonatisierungsreaktion - gegebenenfalls - übriggebliebenen $CO_2$-Gases in die Vorlaufleitung (17) dienende Rücklaufleitung (18) aufweist; in die Vorlaufleitung (17) eine Gaspumpe (16) angeschlossen ist, in die auch die Rücklaufleitung (18) mündet, und in den in der Strömungsrichtung des Gases vor der Pumpe (16) liegenden Abschnitt der Rücklaufleitung (18) eine aus der $CO_2$-Gasquelle (14) austretende, eine Sperrarmatur (15a) enthaltende Leitung (15) mündet; und die Vorlaufleitung (17) mit den gaszuführungsseitigen gesonderten Löchergruppen (11) durch Ventile (17a′, 17b′, 17c′) enthaltende Zweigleitungen (17a, 17b, 17c) verbunden ist, wobei von den zum Abführen des nach der Karbonatisierungsreaktion - gegebenenfalls - übriggebliebenen Gases dienenden Löchergruppen (11) in die Rücklaufleitung (18) mündende ebenfalls Ventile (18a′, 18b′, 18c′) enthaltende Zweigleitungen (18a, 18b, 18c) herausgeführt sind.

12. Einrichtung nach Anspruch 11, dadurch gekennzeichnet, daß in die Rücklaufleitung (18) eine Vakuumpumpe (32) eingeschaltet ist.

13. Einrichtung nach Anspruch 11 oder 12, dadurch gekennzeichnet, daß die einzelnen Löchergruppen (11) sowohl gaszuführungsseitig als auch restgasaustrittsseitig in der Außenfläche der Schablonenplatten (4a, 4b) in gasdicht angeschlossene voneinander getrennte, geschlossene Kammern (23, 24, 25; 27, 28, 29) münden.

14. Einrichtung nach einem der Ansprüche 11 bis 13, dadurch gekennzeichnet, daß die einzelnen Löchergruppen (11) aus im Inneren der Schablonenplatten (4a, 4b) geführten - vorzugsweise meanderförmigen - Kanälen (13) in den Schablonenraum (5) münden, und jeder Kanal (13) mit je einer aus der Vorlaufleitung (17) austretenden Zweigleitung (17a - 17c) bzw. in die Rücklaufleitung (18) mündenden Zweigleitung (18a - 18c) in Verbindung steht.

15. Einrichtung nach einem der Ansprüche 9 bis 14, dadurch gekennzeichnet, daß hinter der Austrittsöffnung (7) der Schablone (1) eine zum Zuschneiden des aus dem Schablonenraum (5) austretenden durch Karbonatisierung erhärteten Körpers (22) geeignete Vorrichtung, vorzugsweise eine Säge (21),

12

EP 0 290 007 B1

angeordnet ist.

16. Einrichtung nach einem der Ansprüche 9 bis 15, dadurch gekennzeichnet, daß der Außenseite der Schablonenplatten (4a, 4b) in dem Bereich hinter der Austrittsöffnung (7) der Schablone (1) eine mindestens je eine Löchergruppe (11) abdeckende Kammer (26, 30) angeschlossen ist und aus diesen Kammern (26, 30) Kontrollventile (20a, 21a) enthaltende Gasaustrittsstutzen (20, 21) herausgeführt sind.

17. Einrichtung nach einem der Ansprüche 9 bis 16, dadurch gekennzeichnet, daß der Preßmechanismus (3) ein alternierend bewegliches Stampfmittel - vorzugsweise einen Kolben (8) - enthält, dessen Querschnittsform und Größe gleich oder im wesentlichen gleich der Querschnittsform und Größe der Eintrittsöffnung (6) der Schablone (1) ist.

18. Einrichtung nach Anspruch 17, dadurch gekennzeichnet, daß die Schablone (1) stehend und der Kolben (8) zwischen Führungsschienen (9) angeordnet ist, daß die Führungsschienen (9) mit einer glockenartigen Schutzverkleidung (10) abgedeckt sind, deren unterer Rand im Bereich der Unterkante der Führungsschienen verläuft und zwischen dem Rand und den Führungsschienen (9) eine Öffnung (10a) besteht und daß der Bewegungsmechanismus (3) mit der Schutzverkleidung (10) zusammen in einem zur Zuführung des rohen zu härtenden Materialgemisches in die Schablone (1) dienenden Trichter (2) angeordnet ist, wobei der Trichter (2) in das obere Ende des Schablonenraums (5) mündet.

## Claims

1. A method of producing bodies, particularly structural components from a mixture of materials containing cement and/or lime as a binder as well as additives and water and requiring to be hardened and in which the as yet not hardened mixture of materials is placed in a template where by the introduction of $CO_2$ gas into the material a carbonating reaction is carried out so that the material mixture is hardened, characterised in that the material mixture which is to be hardened is forced continuously through a template space which is open at both its ends, whereby from the material feed point to the point at which the hardened body emerges, $CO_2$ gas is forced into the material under diminishing pressure and in that in the template space, in the area around the feed point, a quasi gas-proof layer is produced by mechanical compression from the material which is to be hardened and in that a quasi gas-proof situation is established between this layer and the surfaces of the template, and in that in the area surrounding the point of emergence a quantity of $CO_2$ gas is introduced into the template space which is required for complete or substantially complete accomplishment of the chemical reaction required for carbonation.

2. A method according to claim 1, characterised in that the material to be hardened is forced or stamped into the template space with the aid of a means which performs an alternating movement.

3. A method according to claim 1 or 2, characterised in that the $CO_2$ gas is introduced into the template space through at least one boundary face thereof at a pressure which exceeds atmospheric pressure and in that the gas flowing through the material to be hardened is of diminished pressure and is of a lesser quantity while being conveyed out of the template space through at least one other template surface and/or in that a vacuum is applied at least to one face of the template space so that in this way the $CO_2$ gas flows through the material or its through-flow is intensified.

4. A method according to one of claims 1 to 3, characterised in that in a zone (I) which follows the region of the feed location of the compressed material layer, $CO_2$ gas is forced into the pores of the mixture of materials preferably at a pressure of approx. 3 to 6 bars after which, in a second zone (II) which follows on in the direction of material movement, where the momentary reaction of carbonation takes place in explosive fashion, a quantity of $CO_2$ gas corresponding substantially to the quantity of $CO_2$ gas consumed by this reaction is supplied to the material at a relatively low pressure of preferably 2 to 3 bars and so propagation of the carbonation reaction is occasioned following which, in a third zone (III), $CO_2$ gas is conducted into the template space at an even lower pressure of preferably 1 to 2 bars after which the substantially complete completion of the carbonation reaction is achieved.

5. A method according to one of claims 1 to 4, characterised in that in the template space of zone III directly after the outlet orifice of material hardened by carbonation, a compensating zone (Iv) is

13

provided, the emergence of gas from this compensating zone (IV) is monitored and the supply of gas into the zone(s) (I - III) disposed upstream of this compensating zone is carried out in accordance with the quantity and/or pressure of the emerging gas.

6. A method according to one of claims 1 to 5, characterised in that the body hardened by carbonation and emerging from the template space is cut to size.

7. A method according to one of claims 1 to 6, characterised in that the $CO_2$ gas is conveyed into the template space with a mixture of gas containing the $CO_2$ gas in a proportion of preferably at least 30%.

8. A method according to one of claims 1 to 7, characterised in that in addition $CO_2$ gas is supplied to the mixture of raw materials already prior to the introduction of such mixture into the template.

9. An apparatus for the production of bodies, particularly structural components from a mixture of materials to be hardened and containing a cement and/or lime as a binder as well as additives and water, the hardening to be performed by carbonation, the apparatus comprising a template and a source of $CO_2$ gas and in that there are provided in at least one of the template walls suitable apertures for the supply to the template space of $CO_2$ gas at a pressure which exceeds atmospheric pressure, characterised in that the template (1) has a feed aperture (6) which serves for the supply of the crude mixture of materials to be hardened, and also an outlet orifice (7) which serves for the discharge of the body (22) which has been hardened by carbonation; upstream of the inlet aperture (6) there is for forcing into the template space (5) a mixture of materials to be hardened and in that there is for onwards movement of the material mixture to be hardened and for movement through the template space (5) of the hardened body produced by carbonation, a suitable pressing mechanism (3), the holes (12) for the supply of $CO_2$ gas and discharging into this template space (5) being divided into separate groups of holes (11) which are connected to gas supply means suitable for feeding $CO_2$ gas at a pressure which can be separately regulated from one zone to another (I - III).

10. An apparatus according to claim 9, characterised in that in at least one of the template walls, for the dispersion of the $CO_2$ gas remaining possibly after completion of the chemical reaction of carbonation, apertures which are connected to a line through which the $CO_2$ gas source (14) is connected to the template plate (4b) containing these holes (22) for the supply of $CO_2$ gas to the template space (5).

11. An apparatus according to claim 10, characterised in that for the feeding of $CO_2$ gas into the template space (5), it comprises a main line (17) and for the return of $CO_2$ gas which may be left after completion of the carbonation reaction into the main line (17), a return line (18) and in that there is connected into the main line (17) a gas pump (16) into which also the return line (18) discharges and in that a line (15) containing a shutoff valve (15a) and emerging from the $CO_2$ gas source (14) discharges into that portion of the return line (18) which is disposed upstream of the pump (16) in the direction of gas flow; and in that the main line (17) is connected to branch lines (17a, 17b, 17c) containing through valves (17a', 17b', 17c') separate groups of apertures (11) on the gas supply side, whereby from the groups of apertures (11) serving to disperse any possible gas remaining after the carbonation reaction, branch lines (18a, 18b, 18c) which likewise contain valves (18a', 18b', 18c') extend outwardly, likewise discharging into the return line (18).

12. An apparatus according to claim 11, characterised in that a vacuum pump (32) is incorporated into the return line (18).

13. An apparatus according to claim 11 or 12, characterised in that the individual groups of holes (11) and also on the gas supply side as well as on the residual gas emergence side in the outer surface of the template plates (4a, 4b) open out into gas-tightly connected separate closed chambers (23, 24, 25; 27, 28, 29).

14. An apparatus according to one of claims 11 to 13, characterised in that the individual groups of holes (11) from passages (13) guided preferably meanderingly inside the template plates (4a, 4b) discharge into the template space (5), and in that each passage (13) communicates with a respective branch line (17a to 17c) emerging from the main line (17) or a branch line (18a to 18c) discharging into the return line (18).

**15.** An apparatus according to one of claims 9 to 14, characterised in that behind the outlet orifice (7) of the template (1) there is disposed a device, preferably a saw (21), suitable for cutting the body (22) hardened by carbonation and emerging from the template space (5).

**16.** An apparatus according to one of claims 9 to 15, characterised in that there is connected to the outside of the template plates (4a, 4b) in the region behind the outlet orifice (7) of the template (1) a chamber (26, 30) masking at least one group of holes (11) while gas outlet nozzles (20, 21) extend out of these chambers (26, 30) and contain control valves (20a, 21a).

**17.** An apparatus according to one of claims 9 to 16, characterised in that the pressing mechanism (3) comprises an alternatingly movable stamping medium - preferably a piston (8) - of which the cross-sectional form and size is equal to or is substantially equal to the cross-sectional shape and size of the inlet aperture (6) of the template (1).

**18.** An apparatus according to claim 17, characterised in that the template (1) is disposed upright while the piston (8) is disposed between guide rails (9) and in that the guide rails (9) are covered by a bell-like protective cladding (10), the bottom edge of which extends in the region of the bottom edge of the guide rails and in that an aperture (10a) is provided between the edge and the guide rails )9) and in that the movement mechanism (3) with the protective cladding (10) is jointly disposed in a funnel (2) which serves to feed into the template (1) the mixture of raw materials to be hardened, the funnel (2) opening out into the top end of the template space (5).

**Revendications**

1. Procédé de fabrication de corps, notamment d'éléments de construction, à partir d'un mélange de matières à durcir, contenant du ciment et/ou de la chaux comme liants ainsi que des agrégats et de l'eau, dans lequel le mélange de matières non encore durci est disposé dans un moule et où l'on exécute dans ce moule une réaction de carbonatation par introduction de $CO_2$ gazeux dans la matière, et on fait ainsi durcir le mélange de matières, caractérisé en ce que le mélange de matières à durcir est refoulé en continu à travers une chambre de moule ouverte à ses deux extrémités, tandis qu'entre la zone d'entrée de la matière et la zone de sortie du corps durci, on injecte du $CO_2$ gazeux sous une pression décroissante dans la matière et en ce que, dans la chambre de moule, dans le voisinage de la zone d'entrée, on forme une couche quasi étanche aux gaz à partir de la matière à durcir, par une opération de compactage mécanique, et on réalise entre cette couche et les surfaces du moule un état quasi étanche aux gaz tandis que, dans le voisinage de la zone de sortie, on n'introduit dans la chambre du moule que la quantité de $CO_2$ gazeux qui est nécessaire pour assurer la réalisation complète ou sensiblement complète de la réaction chimique de carbonatation.

2. Procédé selon la revendication 1, caractérisé en ce que la matière à durcir est refoulée ou comprimée dans la chambre de moule à l'aide d'un moyen qui exécute un mouvement alternatif.

3. Procédé selon la revendication 1 ou 2, caractérisé en ce que le $CO_2$ gazeux est introduit dans la chambre de moule à travers au moins une surface limite de cette chambre, sous une pression supérieure à la pression atmosphérique, et en ce que le gaz qui traverse la matière à durcir sort de la chambre de moule sous une pression réduite et en une quantité réduite, à travers au moins une autre surface du moule et/ou on applique une dépression à au moins une surface de la chambre de moule, de sorte que le $CO_2$ gazeux traverse ainsi la matière ou que son débit de traversée est intensifié.

4. Procédé selon une des revendications 1 à 3, caractérisé en ce que, dans une zone (1) qui fait suite à la région de la zone d'entrée de la couche de matière compacte, on injecte du $CO_2$ gazeux dans les pores du mélange de matières, de préférence, sous une pression d'environ 3 à 6 bars, et ensuite, on introduit dans une deuxième zone (II) qui fait suite à la première - dans le sens du mouvement de la matière - et dans laquelle la réaction instantanée de carbonatation s'effectue dans un mode explosif, une quantité de $CO_2$ gazeux correspondant sensiblement à la quantité de $CO_2$ qui a été utilisée dans cette réaction, avec une pression réduite, de préférence de 2 à 3 bars, et on assure par ce moyen la poursuite de la réaction de carbonatation, après quoi, dans une troisième zone (III), on introduit du $CO_2$ gazeux dans la chambre de moule sous une pression encore plus faible, de préférence de 1 à 2 bars, et on obtient de cette façon un déroulement sensiblement complet de la réaction de carbonatation.

5. Procédé selon une des revendications 1 à 4, caractérisé en ce que, dans la chambre de moule de la zone (III), qui se trouve immédiatement en amont de l'ouverture de sortie de la matière durcie par la carbonatation, est prévue une zone d'équilibrage (IV), qui contrôle la sortie du gaz de cette zone d'équilibrage (IV) et l'introduction du gaz dans la zone ou les zones (I-III) qui se trouvent en amont de cette zone d'équilibrage, s'effectue en fonction de la quantité et/ou de la pression du gaz sortant.

6. Procédé selon une des revendications 1 à 5, caractérisé en ce que le corps durci par la carbonatation qui sort de la chambre de moule, est découpé à bonne longueur.

7. Procédé selon une des revendications 1 à 6, caractérisé en ce que le $CO_2$ gazeux est introduit dans la chambre de moule à l'aide d'un mélange gazeux qui renferme le $CO_2$ gazeux en une proportion qui est de préférence d'au moins 30 %.

8. Procédé selon une des revendications 1 à 7, caractérisé en ce que du $CO_2$ gazeux est fourni en supplément au mélange brut de matières avant même qu'il ne soit introduit dans le moule.

9. Dispositif pour produire des corps, notamment des éléments de construction, à partir d'un mélange de matières à durcir, comprenant du ciment et/ou de la chaux comme liants, ainsi que des agrégats et de l'eau, en opérant par carbonatation, le dispositif comprenant un moule ainsi qu'une source de $CO_2$ gazeux, et en ce que, dans au moins une des parois du moule, sont prévues des ouvertures appropriées servant à introduire du $CO_2$ gazeux à une pression supérieure à la pression atmosphérique dans la chambre de moule, caractérisé en ce que le moule (1) présente une ouverture d'entrée (6) qui sert à introduire le mélange brut de matières à durcir, ainsi qu'une ouverture de sortie (7) qui sert pour la sortie du corps (22) durci par carbonatation ; en amont de l'ouverture d'entrée (6), est disposé un mécanisme de presse (3) approprié pour introduire le mélange brut de matières à durcir dans la chambre de moule (5) et pour continuer à faire avancer le mélange de matières à durcir et le corps durci par la carbonatation à travers la chambre de moule (5) ; et les trous (12) servant à introduire le $CO_2$ gazeux et qui débouchent dans cette chambre de moule (5) sont répartis en groupes de trous distincts (11) qui sont reliés à l'arrivée du $CO_2$ gazeux par des dispositifs d'introduction du gaz appropriés pour acheminer le $CO_2$ gazeux à une pression qui peut être réglée séparément dans les différentes zones (I à III).

10. Dispositif selon la revendication 9, caractérisé en ce que, dans au moins une des parois du moule sont prévues des ouvertures servant à évacuer le $CO_2$ qui subsiste - éventuellement - après le déroulement de la réaction chimique de carbonatation, ouvertures qui sont raccordées à une conduite par laquelle la source de $CO_2$ gazeux (14) est reliée à la plaque (4b) du moule qui présente les trous (32) servant à introduire le $co_2$ gazeux dans la chambre de moule (5).

11. Dispositif selon la revendication 10, caractérisé en ce qu'il comprend une conduite d'arrivée (17) servant à introduire le $CO_2$ gazeux dans la chambre de moule (5), ainsi qu'une conduite de retour (18) qui sert à renvoyer dans la conduite d'arrivée (17) le $CO_2$ gazeux qui subsiste - éventuellement - après le déroulement de la réaction de carbonatation : à la conduite d'arrivée (17), est raccordée une pompe à gaz (16) dans laquelle débouche aussi la conduite de retour (18), et, dans le segment de la conduite de retour (18) qui se trouve avant la pompe (16) dans le sens de l'écoulement du gaz, débouche une conduite (15), qui part de la source de $CO_2$ gazeux (14) et qui renferme un robinet d'arrêt (15a) ; et la conduite d'arrivée (17) est reliée aux groupes de trous distincts (11) côté arrivée du gaz par des piquages (17a, 17b, 17c) qui renferment des Vannes (17a', 17b', 17c'), tandis que, des groupes de trous (11) servant à évacuer le gaz qui subsiste - éventuellement - après la réaction de carbonatation, partent des piquages (18a, 18b, 18c) qui débouchent dans la conduite de retour (18) et qui comprennent eux aussi des vannes (18a', 18b', 18c').

12. Dispositif selon la revendication 11, caractérisé en ce qu'une pompe à vide (32) est intercalée dans la conduite de retour (18).

13. Dispositif selon la revendication 11 ou 12, caractérisé en ce que les différents groupes de trous (11), aussi bien sur le côté d'arrivée du gaz que sur le côté de sortie du gaz résiduel, situés dans la surface extérieure des plaques (4a, 4b) de la chambre de moule, débouchent dans des chambres fermées, (23, 24, 25 ; 27, 28, 29) qui sont isolées les unes des autres à joint étanche aux gaz.

**14.** Dispositif selon une des revendications 11 à 13, caractérisé en ce que les différents groupes de trous (11) débouchent dans la chambre de moule (5) en partant de canaux (13) - de préférence sinueux - qui sont formés dans l'épaisseur des plaques (4a, 4b) du moule, et chaque canal (13) est en liaison soit avec un piquage (17a-17c) partant de la conduite d'arrivée (17), soit avec un piquage (18a-18c) qui débouche dans la conduite de retour (18).

**15.** Dispositif selon une des revendications 11 à 14, caractérisé en ce qu'en amont de l'orifice de sortie (17) du moule (1), est agencé un appareil, de préférence une scie (21), qui est approprié pour découper le corps (22) durci par la carbonatation, qui sort de la chambre de moule (5).

**16.** Dispositif selon une des revendications 9 à 15, caractérisé en ce qu'à la face extérieure des plaques (4a, 4b) du gabarit est raccordée, dans la région située en amont de l'orifice de sortie (7) du moule (1), une chambre (26, 30) qui recouvre au moins un groupe de trous (11), et,de ces chambres (26, 30), partent des tubulures de sortie du gaz (20, 21) qui comprennent des vannes de commande (20a, 21a).

**17.** Dispositif selon une des revendications 9 à 16, caractérisé en ce que le mécanisme de presse (3) renferme un moyen de compression mobile en mouvement alternatif - de préférence un piston (8) - dont la forme de section et la dimension sont égales ou sensiblement égales à la forme de section et à la dimension de l'ouverture d'entrée (6) du moule (1).

**18.** Dispositif selon la revendication 17, caractérisé en ce que le moule (1) est disposé à axe vertical et le piston (8) est agencé entre des rails de guidage (9), en ce que les rails de guidage (9) sont recouverts d'un revêtement de protection (10) en forme de cloche, dont le bord inférieur s'étend dans la région du bord inférieur des rails de guidage, une ouverture (10a) subsistant entre le bord et les rails de guidage (9), et en ce que le mécanisme de déplacement (3) muni du revêtement protecteur (10) est disposé dans une trémie (2) qui sert à introduire le mélange brut de matières à durcir dans le moule (1), la trémie (2) débouchant dans l'extrémité supérieure de la chambre de moule (5).

Fig. 1

Fig. 3a

Fig. 2

Fig. 3b

Fig.4

Fig.5

Fig.6

Fig.7

$$v = 1\,m/min$$
$$R_0 = 1250\ kg/m^2$$
$$d = 20\ mm$$

Gasbehandlungszeit

Presstreckenlänge(Zonen)

Fig.8

Fig.9a

Fig.9b

Fig.9c

Fig.9d

Fig.9e

Fig.9f

Fig.10